# EUROPEAN PATENT SPECIFICATION

(11) **EP 3 367 645 B1**
(45) Date of publication and mention of the grant of the patent: **13.11.2019**
(21) Application number: 18397509.3
(22) Date of filing: 23.02.2018
(51) Int. Cl.: H04M 1/24, G06Q 10/00, G06Q 30/02, H04M 1/02, H04M 1/725

(54) **A METHOD AND APPARATUS FOR DETERMINING THE CONDITION OF AN ELECTRONIC DEVICE**
VERFAHREN UND VORRICHTUNG ZUR BESTIMMUNG DES ZUSTANDS EINER ELEKTRONISCHEN VORRICHTUNG
PROCÉDÉ ET APPAREIL POUR DÉTERMINER L'ÉTAT D'UN DISPOSITIF ÉLECTRONIQUE

(30) Priority: 24.02.2017 FI 20175176
(43) Date of publication of application: 29.08.2018
(73) Proprietor: Piceasoft OY, 33720 Tampere (FI)
(72) Inventor: Väänänen, Jani, 36240 Kangasala (FI); Salminen, Henri, 33870 Tampere (FI)
(74) Representative: Berggren Oy, Tampere

(56) References cited:
- US-A1- 2012 029 947
- US-A1- 2015 119 109

## Description

### Background

Mobile devices like phones, tablets, portable computers and other electronic devices are abundant, amounting to billions of units sold every year. A person may own many such devices, and may purchase new electronic devices to replace old ones frequently. This trend has created the need to re-use and recycle the old devices. For example, used mobile phones are frequently sold to a new owner. To sell the device to a new owner, the device needs to be checked and some technical operations on the device may need to be performed. These operations take time, and yet the operations and checking need to be done in a reliable manner.

The patent publication WO2016073800 describes an arrangement where an evaluator device can be connected to a device being evaluated and a price of the device to be evaluated can be determined. The patent publication WO2016054435A1 describes an arrangement where electronic devices can be returned for automatic purchase for re-use or recycling. The kiosk has means for checking the device's condition externally, and may also run checks on the electronics. However, a user may find such evaluations of the electronic device to be returned rather cumbersome or difficult to use, and the process may be error-prone.

US20120029947 discloses a method for offering a protection policy for a mobile device, the method comprising the steps of providing an application, conducting a test of the mobile device, calculating the risk of protecting the mobile device, and offering a protection policy. The application is configured to operate on the mobile device and to test at least one function of the mobile device. The test is conducted by the application and verifies at least one function of the mobile device through the application. The risk of protecting the mobile device is based upon at least one result of the test. The protection policy for the mobile device is based upon the calculated risk, has a cost, and is offered for purchase to a user of the mobile device.

US20150119109 discloses an electronic device including a piezoelectric element, and a sound generating unit that is vibrated by the piezoelectric element and generates a vibration sound transmitted by vibrating part of a human body. The electronic device notifies a user of a specific position in the sound generating unit.

There is a need for a solution that provides an improved way to evaluate an electronic device to be sold for re-use or evaluated for another purpose such as for maintenance or insurance purposes.

### Summary

Now there has been invented an improved method and technical equipment implementing the method, by which the above problems are alleviated. Various aspects of the invention include a method, an electronic device, a system and a computer readable medium comprising a computer program stored therein, which are characterized by what is stated in the independent claims. Various embodiments of the invention are disclosed in the dependent claims.

An electronic device may have software in its memory that controls the device, or the electronic device may be remotely controlled. The electronic device may be controlled to perform a human-operated testing sequence. In the testing sequence, the device may inform the user of the internal condition of the electronic device, for example by showing on the screen that the device is in idle mode or in use mode. Alternatively or in addition, the electronic device may instruct the user to change the mode of the device, for example by requesting the user to move the electronic device between two modes. The condition of the electronic device may be determined from signals recorded before, during and after the movement. Such signals may be received from sensors of the electronic device, from the camera, the microphone, or other elements of the electronic device.

In an example, a mobile phone being the electronic device may request the user to move the device from the table onto the user's ear. By the user doing this, the device physically moves from a first position and/or orientation to a second position and/or orientation. The first use mode (the idle mode) may be defined as a mode where the device is at rest, lying on a surface in essentially horizontal orientation. The second use mode (the use mode) may be defined as a mode where the device is being held by the user in an upright orientation, and in a position where the device is normally used for at least one function, possibly close to the ear or touching the cheek and the ear. The instruction may be given by a first communication modality, for example by displaying a text, picture, a video or an animation on the screen. A second instruction may then be given by a second communication modality, for example by the speaker of the electronic device, as sound indications like a number of beeps, or human or synthetic speech. The user may also be requested to carry out other testing operations to the device. During the move from the first mode to the second mode, the signals of one, two, three or more sensors and input/output devices may be recorded and stored either onto the device or onto a network server. The condition of the elements of the device may then be determined from these recorded signals. The user may also be requested to listen to the sound from the electronic device and input the number of beeps he/she hears, or say the words he/she is hearing. This may be used to determine the condition of the speaker. Likewise, output on the screen may be tested.

According to a first aspect there is provided a method of determining the condition of an electronic device, as defined in claim 1.

According to a second aspect, there is provided an electronic device, as defined in claim 11.

According to a third aspect, there is provided a system, as defined in claim 12.

According to a fourth aspect there is provided a computer program product, as defined in claim 13.

Further embodiments are disclosed in the dependent claims.

### Description of the Drawings

In the following, various embodiments of the invention will be described in more detail with reference to the appended drawings, in which
- Figs. 1a and 1b: show a system and devices for testing the condition of an electronic device;
- Figs. 2a, 2b and 2c: show flow charts of methods for testing the condition of an electronic device;
- Fig. 3: illustrates a testing sequence for testing an electronic device;
- Fig. 4: illustrates another testing sequence for testing an electronic device; and
- Fig. 5: illustrates yet another testing sequence for testing an electronic device.

### Description

In the following, several embodiments of the invention will be described in the context of evaluating the condition of personal portable electronic communication devices and computers. It is to be noted, however, that the invention is not limited to such devices, but may be used with any computer or electronic device having a number of components and being capable of interacting with the user either directly or through another device. In fact, the different embodiments may have applications in any environment where evaluation of the condition of an electronic device is required.

It has been noticed in this invention that users of electronic devices may find different ways of determining the condition of a device rather cumbersome. This has the technical consequence that methods for determining the condition of an electronic device may be slow and/or inaccurate. For example, the user may not easily understand what needs to be done in order to test an accelerometer or magnetometer of a device, if the instruction given to the user is "move the device along a figure-eight path while holding the device horizontal". There is also a possibility that the user may purposefully provide wrong information for the manual tests where the final result of tested functionality is based on user decision. E.g., testing the vibration functionality where the user needs to confirm that device was vibrating may be falsely reported. Likewise, in a speaker test the user may need to confirm that he/she heard the sound may be falsely reported. In the invention, such may be avoided as the sensor signals and input data may be used to validate functionality automatically. Also, one easy-to-understand test case that validates multiple areas at the same time may be provided to the user.

The condition of an electronic device may be determined by instructing the user to move the device between an idle mode and an active use mode (the idle mode may be considered to be one use mode). These modes may be such that they are simple modes where the device is when it is being used normally by the user. Thus, the users may understand such modes more easily, and consequently, the modes and the movement between the modes may be universally rather similar between different users. For example, the idle mode is such that the device lies in a horizontal orientation with the screen upwards so that the user can see it. The use mode may be such that the user holds the device in his/her hand, the device is in an essentially vertical orientation on the user's ear so that the user can speak to the device and hear the sound coming from the speaker (using the device as a telephone). These two use modes are well defined and understandable to the user, and thus they provide reliable positions and orientations, as well as a predictable movement path in between, for determining the condition of the device.

When the device is in the idle mode, being moved between the idle mode and the use mode, or in the use mode, signals from one or more sensors and input/output elements of the device may be gathered and thus the functioning of the sensors and elements can be determined. When the device is being physically moved and it's orientation is being changed between the idle and use modes, signals from the accelerometer, gyroscope and magnetometer and other components may be recorded and their correctness may be determined, e.g., by comparing the signals to earlier recorded or predefined baseline signals. Likewise, the display, touch screen, stylus, keyboard, speaker and microphone may be used to interact with the user, and from the correctness of the user's interaction or the signals from these elements it may be determined that one or more of the elements is not functioning. The different modalities may be alternated between when the user is being instructed or interacted with. For example, instructions to the user when the device is in idle mode may be given on the screen, e.g. by text or image or video, and the instructions in the use mode may be given by audio output through the speaker. In this manner, the functioning of different modalities may be determined quickly in the same sequence.

For example, when an instruction is being given to a user, if the user is not able to hear the instruction, the user is not able to interact with the device as expected. Yet further, the user may be asked to give input, e.g. by touch screen or speech, to the device, and if the device is not able to receive such input, it may be determined that the input element is not functioning properly. One or more such determinations may be carried out simultaneously. For example, signals from the motion sensors and the ambient light sensor or camera or the proximity sensor may be recorded simultaneously and compared to a baseline signal or parameters.

Such an operation as described above may be easy for the user to perform, and thus may be more reliable than earlier methods. Also, due to the complex movement path and different simultaneous operations and interactions with the user are commonplace, the method may also be fast, and more difficult to spoof.

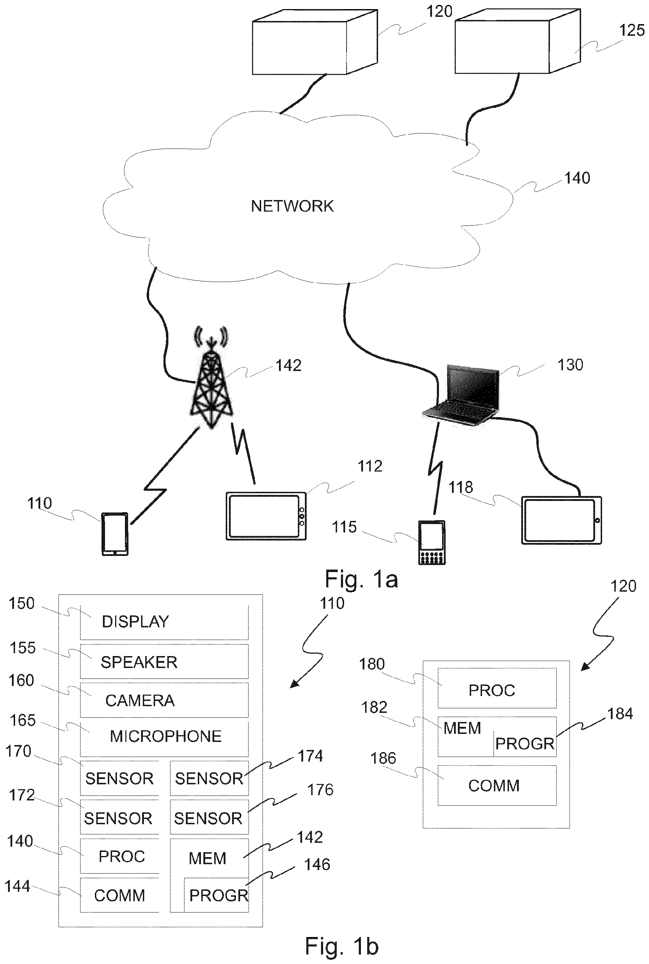

Figs. 1 a and 1 b show a system and devices for testing the condition of sensors in a mobile device. The different devices may be connected to a network NETWORK 140, for example the internet, or a mobile communication network, or a local area network. The devices may be able to communicate with each other over the network connection, or directly, or both. The devices may also operate in a standalone mode, for example the electronic device may be used to determine the condition without any network connection.

There are different devices shown in Fig. 1a. The electronic devices 110, 112, 115, 118 whose condition is being determined may comprise any computer devices with one or more sensors and/or one or more input/output elements. Such devices may be personal computers 130, mobile communication devices such as mobile phones 110, 115 and tablets 112, 118, wearable devices like watches, bracelets, active glasses, augmented reality devices, internet-of-things capable devices and the like. Such devices may be connected to the network NETWORK, for example through a base station 142, or they may be connected to a second device 130 that in turn may be connected to the network. The network NETWORK and/or the second device 130 may provide an input to the electronic device so that it may commence the determination of the condition. Alternatively or in addition, the electronic device may receive such input from the user. The electronic device may also request authentication of the user, e.g. through an input of a passcode, a fingerprint recognition, a face recognition or a voice recognition, or another authentication to prove that the user is authorized to determine the condition of the electronic device. The electronic device may have an application for controlling the electronic device when the condition of the electronic device is being determined, for creating and storing of the determined condition, or an identifier for such. The application may also cause the electronic device to interact with the user.

There may be one or more servers 120, 125 connected to the network NETWORK and having a communication connection with the electronic device 110, 112, 115, 118. Such servers may alone or together form a server system for determining the condition of the electronic device. For example, the server system may control the electronic device, or instruct the user. The server system may also store signals or data derived from the signals coming from the sensors and/or input/output elements of the electronic device. The server system may also determine the condition of the electronic device and/or store the determined condition, or an identifier for such. The server system may provide the determined condition or an identifier of the same to the electronic device or another electronic device of the user, or through a network service to the user.

Fig. 1b displays block diagrams of an electronic device and a server system.

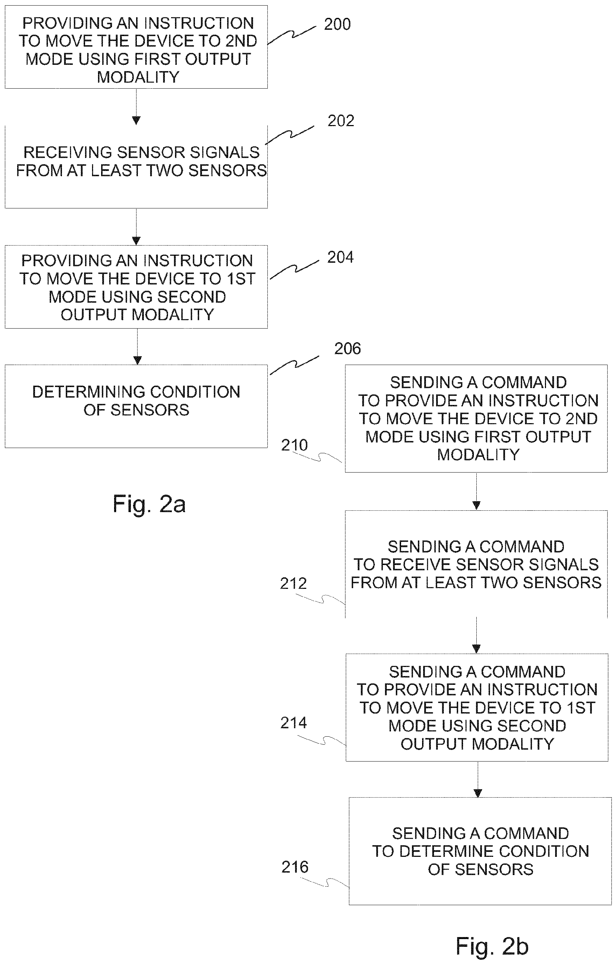

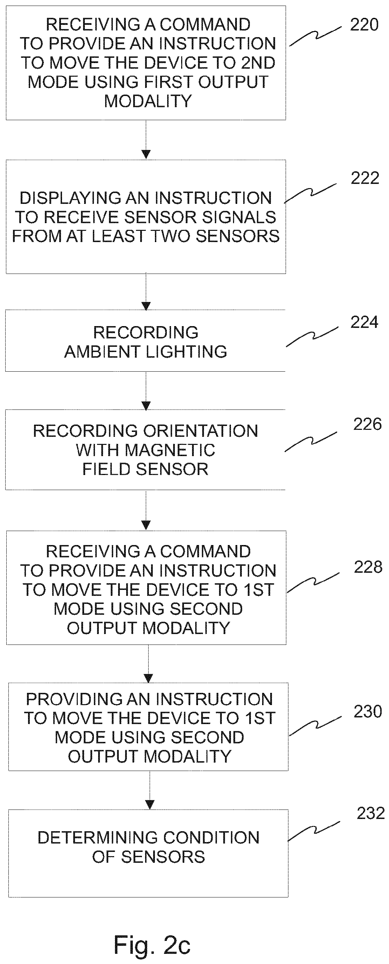

The electronic device 110, 112, 115, 118 may comprise input/output elements such as a display 150, a speaker 155, a camera 160 and a microphone 165. The electronic device may also comprise different sensors, for example an accelerometer 170, a magnetometer 172, a proximity sensor 174 and an ambient light sensor 176. The electronic device 110, 112, 115, 118 may comprise one or more processors 140 and memory 142 including computer program code 146. The memory 142 and the computer program code 146 may be configured to, with the one or more processors, cause the electronic device to perform the operations according to the present description, for example the methods in Figs. 2a, 2b and 2c. The electronic device may comprise a communication module 144 for communicating with the network and/or the server system 120, 125 and/or a second device 130.

The device may be arranged to receive a first input to the electronic device to commence determining condition of the electronic device, and then during movement of the electronic device between a first use mode and a second use mode, receive one or more signals from at least one sensor or an input element of the electronic device. The device may store data indicative of the signals to a memory. These data indicative of the signals may be used to determine the condition of the electronic device. This information of the condition of the electronic device may be provided to the user. The electronic device or another device may, in response to receiving the first input, provide a first instruction to a user, the first instruction comprising guidance in a first output modality to move the electronic device from a first use mode to a second use mode. When the electronic device has been moved to the second use mode, the electronic device or another device may provide a second instruction to the user using a second output modality.

The system for determining the condition of an electronic device may comprise one or more parts 110, 112, 115, 118, 120, 125, 130. For example, there may be a server system with one or more servers 120, 125 connected over a network to an electronic device 110, 112, 115, 118. Thus, the system may comprise at least one processor 180, memory 182 including computer program code 184, the memory 182 and the computer program code 184 configured to, with the at least one processor, cause the system to carry out the operations according to the current description, e.g. as in Figs. 2a, 2b and 2c.

The system may provide a first input to an electronic device 110, 112, 115, 118 to commence the determining the condition of said electronic device. Related to providing the first input, the system may provide a first instruction to a user, the first instruction comprising guidance in a first output modality to move said electronic device from a first use mode to a second use mode. During movement of the electronic device between said first use mode and said second use mode, the system, a second device or the electronic device may receive one or more signals from at least one sensor or an input element of said electronic device, and store data indicative of said signals to a memory, either at the electronic device or on a server 120, 125, or a second device 130. When the electronic device has been moved to the second use mode, the system provide a second instruction to the user using a second output modality. The system may then determine the condition of said electronic device using said data indicative of signals stored in the memory, and provide information of the condition of the electronic device to the user. The system may comprise a communication module 186 for communicating with the network and/or the electronic device.

The different devices in Figs. 1a and 1b may comprise software and circuitry for carrying out the different operations. Such software may be loaded into the memory of the device, and then executed on the processor of the device. A computer program product for use with the devices of Figs. 1a and 1b may be embodied on a non-transitory computer readable medium, and may comprise computer program code configured to, when executed on at least one processor, cause a device or a system of Figs. 1a and 1b to carry out methods and operations as described in the present description, e.g. for Figs. 2a, 2b and 2c.

Figs. 2a, 2b and 2c show flow charts of methods for testing the condition of sensors in a mobile device 110, 112, 115, 118. Fig. 2a shows a flow chart of a method of determining the condition of an electronic device as carried out in the electronic device. In phase 200, a first input is received to the electronic device to commence the determining the condition of said electronic device. Such an instruction may be provided by a user, or it may be received or provided to the electronic device from another device such as a server or a second device. In phase 202, the device may start receiving one or more signals from at least one sensor or an input element of said electronic device, and may start storing data indicative of said signals to a memory, such that the signals are recorded during movement of said electronic device between a first use mode and a second use mode. A plurality of signals may be received from at least two sensors and/or input elements of said electronic device essentially simultaneously or in sequence during the movement, and data indicative of the signals may be stored to the memory. Here, the signals may be received after the determination has commenced and before the determination has stopped. Alternatively, the signals may be received only when the device is moving. In phase 204, in response to receiving the first input, a first instruction may be provided to a user. The first instruction may comprise guidance in a first output modality to move the electronic device from a first use mode to a second use mode. In phase 206, the condition of the electronic device may be determined using the data indicative of signals stored in the memory. For example, parameters may be computed from the signals, or the signals may be compared to a template and a deviation index may be computed. When the electronic device has been moved to the second use mode, a second instruction may be provided to the user using a second output modality such that the user knows that the device is in a status that determination has been completed. The second instruction may comprise guidance in a second output modality to move the electronic device from the second use mode to the first use mode. Furthermore, information on the condition of the electronic device may be provided to said user, by said electronic device or through other means. For example, the results may be stored on the electronic device 110, on another device 130, or on a server system 120, 125. The user may thus know the condition of the device and its elements and may be able to interact with the device better.

Fig. 2b shows a flow chart of determining the condition of an electronic device 110, 112, 115, 118 as carried out by a network server system 120, 125 or by a second device 130, by sending commands to the electronic device over a communication connection. In phase 210, the server system or the second device sends a command (a first input) to the electronic device, and consequently this first input is received to the electronic device from a network server system over a communication connection. This first input causes an instruction to be provided, through a first interaction modality such as the display, to a user to move the device to a second mode. The instruction may be provided by the electronic device. In phase 212, a command may be sent from the server system or second device to the electronic device to receive sensor signals from one sensor or at least two sensors. A plurality of signals may be received from at least two sensors and/or input elements of said electronic device essentially simultaneously or in sequence during the movement, and data indicative of the signals may be stored to the memory. In phase 214, a command may be sent to the electronic device to provide an instruction to the user to move the device to first mode. This instruction may be provided through a second output modality, for example audio. Data indicative of the signals from the sensor(s) and the input/output elements may be stored to a memory on the network server system, and the condition of the electronic device may be determined at least partly by the network server system. Alternatively or in addition, a command may be sent to the electronic device to determine the condition of the sensors in phase 216.

In the above, the commands may be provided from a second device 130, where the second device is operatively connected to said electronic device. In such a case, the first instruction to the user may be provided from said second device, and the data indicative of signals may be stored to a memory on said second device. This is advantageous, if the electronic device 110, 112, 115, 118 is e.g. a small embedded device that does not have the means to interact with the user in a sufficient manner, or that has limited functionality or memory to carry out the various operations independently.

Fig. 2c shows a flow chart of determining the condition of an electronic device together by the server system and the electronic device. In phase 220, the server system or the second device sends a command (a first input) to the electronic device, and consequently this first input is received to the electronic device from a network server system over a communication connection. This first input causes an instruction to be provided in phase 222, through a first interaction modality such as the display, to a user to move the device to a second mode. The instruction may be provided by the electronic device. In phase 224, ambient lighting may be recorded, or the surroundings of the electronic device may be otherwise sensed, e.g. by proximity sensor. In phase 226, orientation of the device may be sensed by a magnetic field sensor or by an accelerometer, or the status of the device may otherwise be sensed. In phases 224 and 226, the different sensor signals may be recorded during the moving of the device from the first mode to the second mode.

The different sensors and input/output elements whose signals are recorded may comprise one or more (or a plurality of any of the type) of the group of an accelerometer, a gyroscope, a magnetic field sensor, an ambient light sensor, a proximity sensor, a capacitive sensor and a camera, and said input element is from a group of a touch screen, a keyboard, a microphone, a camera, a haptic input device and a communication element. In phase 228, a command may be sent to the electronic device to provide an instruction to the user to move the device to first mode. This instruction may be provided through a second output modality, for example audio, in phase 230. Data indicative of the signals from the sensor(s) and the input/output elements may be stored to a memory on the network server system, and the condition of the electronic device may be determined at least partly by the network server system in phase 232. Alternatively or in addition, a command may be sent to the electronic device to determine the condition of the sensors.

When the condition of the electronic device has been determined, an identifier of said determining said condition of said electronic device may be formed. Such an identifier may be a number or a string, or another entity like a code of a kind, for example a bar code or a QR code. The information on the condition may be stored so that it is accessible using the identifier. For example, the information may reside in a network service that requires the identifier for accessing the information. The identifier may be an optically readable code such as a QR code. The optically readable code may be stored on the electronic device to be readable by an optical code reader from a display of said electronic device, and the information on the condition of the electronic device may be stored on the electronic device and/or on the network server system. The optically readable code may be stored on said network server system and may be provided from there to said electronic device, for example by e-mail or a multimedia message.

An electronic device whose condition has been determined may be provided to another user, for example through re-sale of the device. In such a case, the electronic device needs to be emptied from information, that is, the data from the memory needs to be removed. For this purpose, it may be verified that the condition of said electronic device has been determined, for example by using the above mentioned identifier. Information on the determination, or a link to the information, may be temporarily stored outside the electronic device. In response to the verifying, the electronic device may then be erased. To be able to access the information on the condition of the electronic device, the information and/or a link to the information (e.g. the identifier) may be stored onto the electronic device.

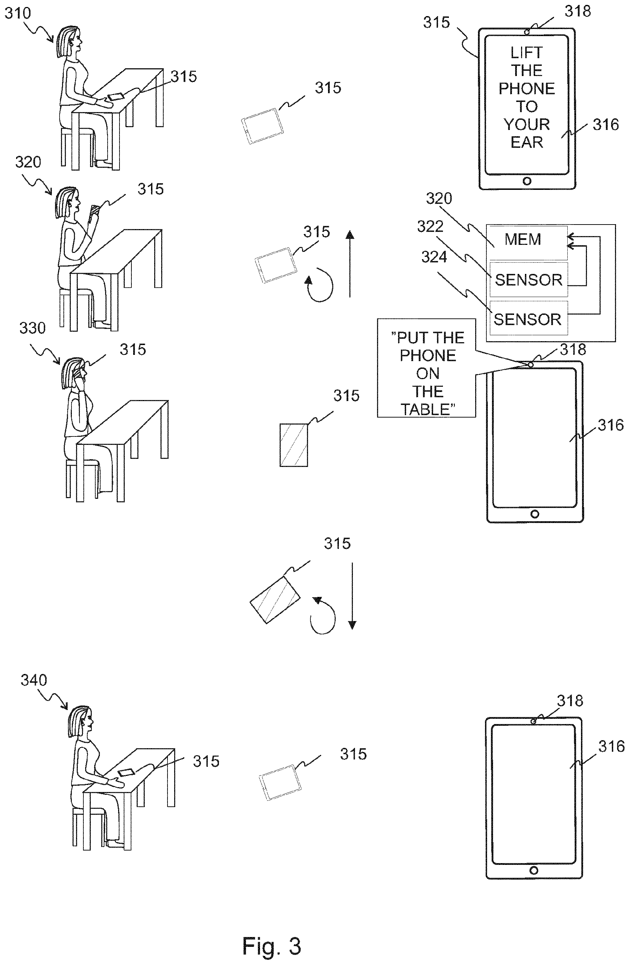

Fig. 3 illustrates a testing sequence for testing an electronic device 315 (in Figs. 1a and 1b, 110, 112, 115, 118). First, in phase 310, the electronic device 315 is lying, e.g. on the table, in a horizontal orientation and in idle mode. After starting the determination process, e.g. by the user giving an input to do so, the electronic device may display on the screen 316 (as a first output modality) to the user an instruction to move the device to a use mode. For example, the device may ask the user to "lift the phone to your ear". In phase 320, the user is moving the device to use mode, and consequently, the device is being rotated and translated in space. These movements can be measured by the sensors 322, 324 of the device, and the signals from the sensors may be stored to the memory 320. In phase 330, the device 315 is in use mode, and the device may provide an audible instruction (as a second output modality) to the user to "put the phone on the table" through the speaker 318. In phase 340, the device has been put back in idle mode on the table and the recording of the signals is ended.

Because the dimensions and biomechanics of the human body are fairly similar from user to user, such testing may provide a reliable and repeatable way of recording signals from the sensors and elements of the electronic device. Also, because the movement path by a human user involves both translation along a non-linear path in space as well as rotation horizontally and vertically, the sensors may gather versatile data for determining the condition of the electronic device. Furthermore, the movement by the user involves different states of the cameras and light sensors, as well as different distances from the speaker and microphone to the user, these elements can be tested, as well. Finally, the movement between two use modes of the device may be fairly commonly known and thus easy to understand.

The sequence for determining the condition of the electronic device may also be described as in the following example. When the evaluation begins, the user may be requested to place the electronic device on a table such that the screen is facing upwards. At this time, the sensors of the device may be used to determine that the user has done this and that the necessary conditions are fulfilled (e.g. the device is stationary). After this, a number of automatic tests may be carried out. The user may be alerted by vibration and/or sound, and a text "lift the device on your ear and listen, how many beeps you can hear. When the device vibrates, put it back on the table" may be shown on the screen. At this point, recording signals from the sensors may be started: accelerometer, gyroscope, magnetometer, proximity, camera and ambient light sensors are used. When the orientation and/or position of the device is correct, a random number of sounds like beeps may be produced through the speaker of the electronic device. After this, the vibration engine of the device may be rotated to signal to the user that the evaluation is ready and the device can be put back onto the table. Thus, the vibration may be considered as instructing the user to return the device to the idle mode. The user may then be requested to input the number of beeps he/she heard. The sensor signals and user input data individually or in combination may be used to determine that some parts are possibly malfunctioning (this malfunctioning may be evaluated in more detail later), or that all parts appear to be functioning properly. Different input and output may be used depending on need and the device functionalities.

The cameras (front and/or back cameras) of the device may also be used to ensure the user carries out a proper movement and that the device has been placed to correctly on the ear, for example using shape recognition (of head, ear, hair, skin, or other body parts). First, the front camera is expected to record a non-dark picture and the back camera should be essentially dark, as the device is on the table. When the user moves the device onto the ear, the lighting in the cameras changes: the front camera records a darker picture and the back camera records a lighter picture. This can be used to evaluate the correctness of the move and the functioning of the cameras.

The testing may be carried out as follows. An optical code such as a QR code or bar code may be presented on a web page, e.g. a web page of a service operator or a device reseller. The code may be user specific such that the code defines information on the test cases to be carried out. When the user installs a testing application and uses it to scan the code, the device may automatically start the testing sequence. The signals and/or the analysis results of the signals may be sent to a network server, from where they can be retrieved for viewing. Such an operation may be useful when the testing needs to be carried out in a place that is different from the business place of a service vendor. For example, users may carry out testing to their electronic devices before sending or delivering them to service, whereby the service time may be shortened.

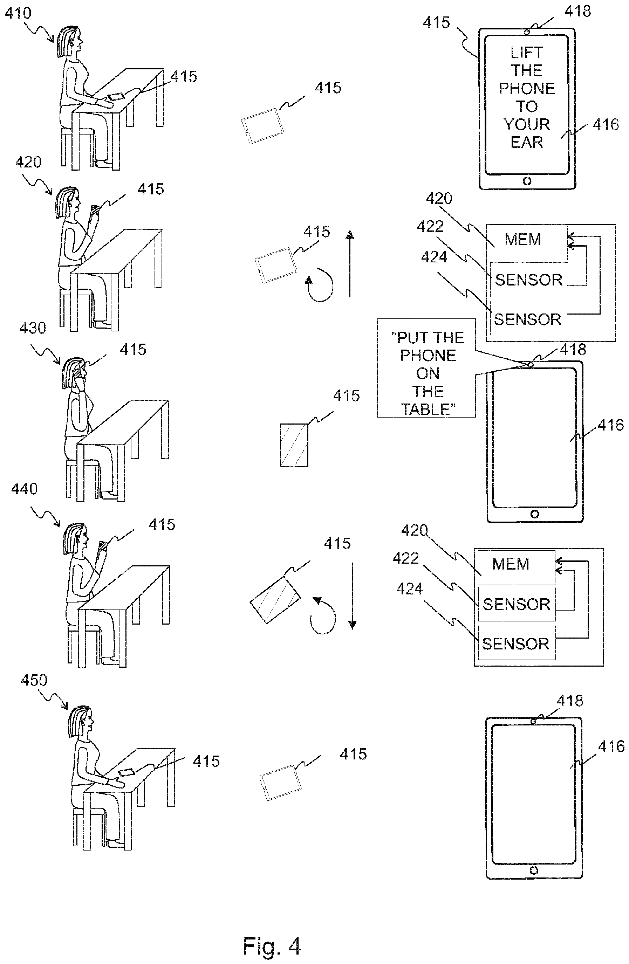

Fig. 4 illustrates another testing sequence for testing an electronic device 415 (in Figs. 1a and 1b, 110, 112, 115, 118). First, in phase 410, the electronic device 415 is lying on the table in a horizontal orientation and in idle mode. After starting the determination process, e.g. by the user giving an input to do so, the electronic device may display on the screen 416 (as a first output modality) to the user an instruction to move the device to a use mode. For example, the device may ask the user to "lift the phone to your ear". In phase 420, the user is moving the device to use mode, and consequently, the device is being rotated and translated in space. These movements can be measured by the sensors 422, 424 of the device, and the signals from the sensors may be stored to the memory 420. In phase 430, the device 415 is in use mode, and the device may provide an audible instruction (as a second output modality) to the user to "put the phone on the table" through the speaker 418. In phase 440, the user is moving the device 415 back to the table. Consequently, the device is being translated and rotated, and this can be sensed by the motion and orientation sensors 422, 424 of the device, and the information can be stored in the memory 420. The sensors being used in the phase 420 and in the phase 440 may be the same, or they may be different sensors, or they may be partially different sensors. For example, in phase 420, the accelerometer and the proximity sensor signals may be recorded, and in phase 440, the magnetometer and the ambient light sensor signals may be recorded. In phase 450, the device has been put back in idle mode on the table and the recording of the signals is ended. In addition, the device may then request the user to speak some words or touch different areas of the touch screen to test the condition of the touch screen and the microphone.

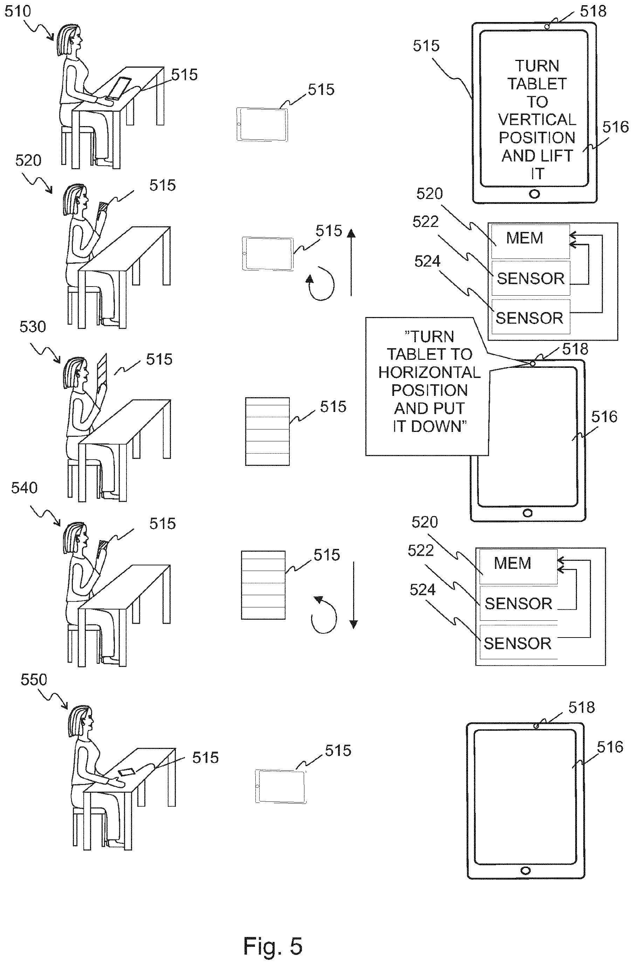

Fig. 5 illustrates yet another testing sequence for testing an electronic device 515 (in Figs. 1a and 1b, 110, 112, 115, 118), here a tablet computer. First, in phase 510, the electronic device 515 is lying on the table in a horizontal orientation and in idle mode. After starting the determination process, e.g. by the user giving an input to do so, the electronic device may display on the screen 516 (as a first output modality) to the user an instruction to move the device to a use mode. For example, the device may ask the user to "turn the tablet to vertical position and lift it to the level of your eyes". In phase 420, the user is moving the device to use mode, and consequently, the device is being rotated and translated in space. These movements can be measured by the sensors 522, 524 of the device, and the signals from the sensors may be stored to the memory 520. In phase 530, the device 515 is in use mode, and the device may provide an audible instruction (as a second output modality) to the user to "turn the tablet to horizontal position and put it down on the table" through the speaker 518. In phase 540, the user is moving the device 515 back to the table. Consequently, the device is being translated and rotated, and this can be sensed by the motion and orientation sensors 522, 524 of the device, and the information can be stored in the memory 520. The sensors being used in the phase 520 and in the phase 540 may be the same, or they may be different sensors, or they may be partially different sensors. For example, in phase 520, the accelerometer and the proximity sensor signals may be recorded, and in phase 540, the magnetometer and the ambient light sensor signals may be recorded. In phase 550, the device has been put back in idle mode on the table and the recording of the signals is ended. In addition, the device may then request the user to speak some words or touch different areas of the touch screen to test the condition of the touch screen and the microphone.

The various embodiments of the invention can be implemented with the help of computer program code that resides in a memory and causes the relevant apparatuses to carry out the invention. For example, an electronic device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

It is clear that the present invention is not limited solely to the above-presented embodiments, but it can be modified within the scope of the appended claims.

## Claims

1. A method of determining the condition of an electronic device (315), comprising:
- receiving a first input to the electronic device (315) to commence said determining the condition of said electronic device,
- in response to receiving said first input, providing a first instruction to a user, said first instruction comprising guidance in a first output modality to move said electronic device from a first use mode to a second use mode,
- during movement of the electronic device (315) from the first use mode to the second use mode, receiving signals from at least two sensors of the electronic device, and storing data indicative of the signals to a memory;
- providing, when the electronic device is in the second use mode, a second instruction to said user, said second instruction comprising guidance in a second output modality, which is different from the first output modality, to move said electronic device from said second use mode to said first use mode;
- during movement of said electronic device (315) from said second use mode to the first use mode, receiving signals from at least two sensors (322, 324) of said electronic device, and storing data indicative of said signals to a memory,
- determining said condition of said electronic device (315) using said data indicative of signals stored in said memory, and
- providing information of said condition of said electronic device (315) to a user.

2. The method according to claim 1, wherein the first use mode is a mode where the device is in essentially horizontal orientation and the second use mode is a mode where the device is held on the user's ear.

3. The method according to claim 1 or 2, the method further comprising
providing, when the electronic device is in the second use mode, the second instruction as sound indications to said user in the second output modality which is a speaker (318);
requesting said user to interact, via an input element, based on the sound indications and wherein said determining said condition of said electronic device comprises
determining condition of the speaker (318) based on the correctness of the user's interaction.

4. The method according to claim 3, wherein the sound indications comprise a number of beeps; and the method further comprises
requesting said user to provide, via the input element, a number of beeps heard by said user; and wherein said determining said condition of said electronic device comprises
determining condition of a speaker (318) of the electronic device (315) based on said number of beeps heard by said user.

5. The method according to any of the claims 1 to 4, comprising:
- forming an identifier of said determining said condition of said electronic device (315),
- storing information of said condition of said electronic device (315) to be accessible using said identifier.

6. The method according to claim 5, wherein said identifier is an optically readable code such as a QR code, said optically readable code being stored on said electronic device to be readable by an optical code reader from a display of said electronic device, and said information on said condition of said electronic device being stored on said electronic device (315) and/or on a network server system (120).

7. The method according to claim 5 or 6, wherein said identifier is an optically readable code such as a QR code, said optically readable code being stored on a network server system (120) and having been provided from there to said electronic device (315).

8. The method according to any of the claims 5 to 7, comprising:
- verifying that said condition of said electronic device (315) has been determined,
- in response to said verifying showing that said condition of said electronic device (315) has been determined, erasing said electronic device (315), and
- after said erasing, storing said identifier and/or said information of said condition of said electronic device onto said electronic device (315).

9. The method according to any of the claims 1 to 8, wherein said at least two sensors (322, 324) are from a group of an accelerometer, a gyroscope, a magnetic field sensor, an ambient light sensor, a proximity sensor, a capacitive sensor and a camera, and said input element is from a group of a touch screen, a keyboard, a microphone, a camera, a haptic input device and a communication element.

10. The method according to any of the claims 1 to 9, wherein the first input is an image of a QR code.

11. An electronic device (110) comprising at least one processor (140), memory (142) including computer program code (146), the memory and the computer program code configured to, with the at least one processor, cause the electronic device to carry out the method according to any of the claims 1 to 10.

12. A system comprising an electronic device (110), at least one processor (180), memory (182) including computer program code (184), the memory and the computer program code configured to, with the at least one processor, cause the system to carry out the method according to any of the claims 1 to 10.

13. A computer program product embodied on a non-transitory computer readable medium, comprising computer program code configured to, when executed on at least one processor, cause a device or a system to carry out the method according to any of the claims 1 to 10.

## Patentansprüche

1. Verfahren zum Bestimmen des Zustands einer elektronischen Vorrichtung (315), umfassend:
- Empfangen einer ersten Eingabe in die elektronische Vorrichtung (315), um das Bestimmen des Zustands der elektronischen Vorrichtung zu beginnen,
- in Reaktion auf das Empfangen der ersten Eingabe, Übermitteln einer ersten Instruktion an einen Nutzer, wobei die erste Instruktion eine Anleitung in einer ersten Ausgabemodalität umfasst, die elektronische Vorrichtung aus einem ersten Verwendungsmodus in einen zweiten Verwendungsmodus zu versetzen,
- während des Versetzens der elektronischen Vorrichtung (315) aus dem ersten Verwendungsmodus in den zweiten Verwendungsmodus, Empfangen von Signalen von mindestens zwei Sensoren der elektronischen Vorrichtung, und Speichern von Daten, die die Signale darstellen, in einem Speicher;
- Übermitteln, wenn die elektronische Vorrichtung im zweiten Verwendungsmodus ist, einer zweiten Instruktion an den Nutzer, wobei die zweite Instruktion eine Anleitung in einer zweiten Ausgabemodalität umfasst, die sich von der ersten Ausgabemodalität unterscheidet, die elektronische Vorrichtung aus dem zweiten Verwendungsmodus in den ersten Verwendungsmodus zu versetzen;
- während des Versetzens der elektronischen Vorrichtung (315) aus dem zweiten Verwendungsmodus in den ersten Verwendungsmodus, Empfangen von Signalen von mindestens zwei Sensoren (322, 324) der elektronischen Vorrichtung, und Speichern von Daten, welche die Signale darstellen, in einem Speicher,
- Bestimmen des Zustands der elektronischen Vorrichtung (315) unter Verwendung der Daten, die Signale darstellen, die in dem Speicher gespeichert sind, und
- Übermitteln von Informationen über den Zustand der elektronischen Vorrichtung (315) an einen Nutzer.

2. Verfahren nach Anspruch 1, wobei der erste Verwendungsmodus ein Modus ist, wo sich die Vorrichtung in einer im Wesentlichen horizontalen Ausrichtung befindet, und der zweite Verwendungsmodus ein Modus ist, wo die Vorrichtung an das Ohr des Nutzers gehalten wird.

3. Verfahren nach Anspruch 1 oder 2, wobei das Verfahren des Weiteren Folgendes umfasst:
Übermitteln, wenn sich die elektronische Vorrichtung im zweiten Verwendungsmodus befindet, der zweiten Instruktion als Tonhinweise an den Nutzer in der zweiten Ausgabemodalität, die ein Lautsprecher (318) ist;
Auffordern des Nutzers, auf der Basis der Tonhinweise über ein Eingabeelement zu interagieren, und wobei das Bestimmen des Zustands der elektronischen Vorrichtung das Bestimmen des Zustands des Lautsprechers (318) auf der Basis der Richtigkeit der Interaktion des Nutzers umfasst.

4. Verfahren nach Anspruch 3, wobei die Tonhinweise eine Anzahl von Pieptönen umfassen; und das Verfahren des Weiteren Folgendes umfasst:
Auffordern des Nutzers, über die Eingabeelement eine Anzahl von Pieptönen auszugeben, die der Nutzer hören kann; und wobei das Bestimmen des Zustands der elektronischen Vorrichtung das Bestimmen des Zustands eines Lautsprechers (318) der elektronischen Vorrichtung (315) auf der Basis der Anzahl der vom Nutzer gehörten Pieptöne umfasst.

5. Verfahren nach einem der Ansprüche 1 bis 4, umfassend:
- Bilden eines Identifizierers des Bestimmens des Zustands der elektronischen Vorrichtung (315),
- Speichern von Informationen über den Zustand der elektronischen Vorrichtung (315), auf die unter Verwendung des Identifizierers zugegriffen werden kann.

6. Verfahren nach Anspruch 5, wobei der Identifizierer ein optisch lesbarer Code, wie zum Beispiel ein QR-Code, ist, wobei der optisch lesbare Code auf der elektronischen Vorrichtung so gespeichert ist, dass er durch ein Opto-Code-Lesegerät von einer Anzeige der elektronischen Vorrichtung lesbar ist, und die Informationen über den Zustand der elektronischen Vorrichtung in der elektronischen Vorrichtung (315) und/oder auf einem Netzwerkserver des Systems (120) gespeichert werden.

7. Verfahren nach Anspruch 5 oder 6, wobei der Identifizierer ein optisch lesbarer Code, wie zum Beispiel ein QR-Code, ist, wobei der optisch lesbare Code auf einem Netzwerkserversystem (120) gespeichert ist und von der elektronischen Vorrichtung (315) übermittelt wurde.

8. Verfahren nach einem der Ansprüche 5 bis 7, umfassend:
- Verifizieren, dass der Zustand der elektronischen Vorrichtung (315) bestimmt wurde,
- in Reaktion darauf, dass das Verifizieren ergibt, dass der Zustand der elektronischen Vorrichtung (315) bestimmt wurde, Löschen der elektronischen Vorrichtung (315), und
- nach dem Löschen, Speichern des Identifizierers und/oder der Informationen über den Zustand der elektronischen Vorrichtung in der elektronischen Vorrichtung (315).

9. Verfahren nach einem der Ansprüche 1 bis 8, wobei die mindestens zwei Sensoren (322, 324) aus folgender Gruppe stammen: ein Beschleunigungsmesser, ein Gyroskop, ein Magnetfeldsensor, ein Umgebungslichtsensor, ein Näherungssensor, ein kapazitiver Sensor und eine Kamera, und das Eingabeelement aus folgender Gruppe stammt: ein Berührungsbildschirm, eine Tastatur, ein Mikrofon, eine Kamera, eine haptische Eingabevorrichtung und ein Kommunikationselement.

10. Verfahren nach einem der Ansprüche 1 bis 9, wobei die erste Eingabe ein Bild eines QR-Codes ist.

11. Elektronische Vorrichtung (110), die mindestens einen Prozessor (140) und einen Speicher (142), der Computerprogrammcode (146) enthält, umfasst, wobei der Speicher und der Computerprogrammcode dafür ausgebildet sind, zusammen mit dem mindestens einen Prozessor die elektronische Vorrichtung zu veranlassen, das Verfahren nach einem der Ansprüche 1 bis 10 auszuführen.

12. System, das eine elektronische Vorrichtung (110), mindestens einen Prozessor (180) und einen Speicher (182), der Computerprogrammcode (184) enthält, umfasst, wobei der Speicher und der Computerprogrammcode dafür ausgebildet sind, zusammen mit dem mindestens einen Prozessor das System zu veranlassen, das Verfahren nach einem der Ansprüche 1 bis 10 auszuführen.

13. Computerprogrammprodukt, das auf einem nicht-transitorischen computerlesbaren Medium verkörpert ist, das Computerprogrammcode umfasst, der dafür ausgebildet ist, wenn er auf mindestens einem Prozessor ausgeführt wird, eine Vorrichtung oder ein System zu veranlassen, das Verfahren nach einem der Ansprüche 1 bis 10 auszuführen.

## Revendications

1. Un procédé de détermination de l'état d'un dispositif électronique (315), comprenant :
- la réception d'une première entrée vers le dispositif électronique (315) destinée à commencer ladite détermination de l'état dudit dispositif électronique,
- en réponse à la réception de ladite première entrée, la fourniture d'une première instruction à un utilisateur, ladite première instruction comprenant des conseils relatifs à une première modalité de production en sortie destinée au déplacement dudit dispositif électronique d'un premier mode d'utilisation vers un deuxième mode d'utilisation,
- au cours du déplacement du dispositif électronique (315) du premier mode d'utilisation vers le deuxième mode d'utilisation, la réception de signaux à partir d'au moins deux capteurs du dispositif électronique, et la conservation en mémoire de données indicatives des signaux dans une mémoire,
- la fourniture, lorsque le dispositif électronique est dans le deuxième mode d'utilisation, d'une deuxième instruction audit utilisateur, ladite deuxième instruction comprenant des conseils relatifs à une deuxième modalité de production en sortie, qui est différente de la première modalité de production en sortie, destinée au déplacement dudit dispositif électronique dudit deuxième mode d'utilisation vers ledit premier mode d'utilisation,
- au cours du déplacement dudit dispositif électronique (315) dudit deuxième mode d'utilisation vers le premier mode d'utilisation, la réception de signaux à partir d'au moins deux capteurs (322, 324) dudit dispositif électronique, et la conservation en mémoire de données indicatives desdits signaux dans une mémoire,
- la détermination dudit état dudit dispositif électronique (315) au moyen desdites données indicatives de signaux conservées en mémoire dans ladite mémoire, et
- la fourniture d'informations dudit état dudit dispositif électronique (315) à un utilisateur.

2. Le procédé selon la revendication 1, dans lequel le premier mode d'utilisation est un mode dans lequel le dispositif est dans une orientation essentiellement horizontale et le deuxième mode d'utilisation est un mode dans lequel le dispositif est tenu sur l'oreille de l'utilisateur.

3. Le procédé selon la revendication 1 ou 2,
le procédé comprenant en outre
la fourniture, lorsque le dispositif électronique est dans le deuxième mode d'utilisation, de la deuxième instruction sous la forme d'indications sonores audit utilisateur dans la deuxième modalité de production en sortie qui est un haut-parleur (318),
la demande adressée audit utilisateur d'interagir, par l'intermédiaire d'un élément en entrée, en fonction des indications sonores et dans laquelle ladite détermination dudit état dudit dispositif électronique comprend la détermination d'un état du haut-parleur (318) en fonction de l'exactitude de l'interaction de l'utilisateur.

4. Le procédé selon la revendication 3, dans lequel les indications sonores comprennent un nombre de bips, et le procédé comprend en outre la demande adressée audit utilisateur de fournir, par l'intermédiaire de l'élément en entrée, un nombre de bips entendus par ledit utilisateur, et dans laquelle ladite détermination dudit état dudit dispositif électronique comprend la détermination d'un état d'un haut-parleur (318) du dispositif électronique (315) en fonction dudit nombre de bips entendus par ledit utilisateur.

5. Le procédé selon l'une quelconque des revendications 1 à 4, comprenant :
- la formation d'un identifiant de ladite détermination dudit état dudit dispositif électronique (315),
- la conservation en mémoire d'informations dudit état dudit dispositif électronique (315) de façon à être accessibles au moyen dudit identifiant.

6. Le procédé selon la revendication 5, dans lequel ledit identifiant est un code lisible optiquement tel qu'un code QR, ledit code lisible optiquement étant conservé en mémoire sur ledit dispositif électronique de façon à être lisible par un lecteur de code optique à partir d'un dispositif d'affichage dudit dispositif électronique, et lesdites informations relatives audit état dudit dispositif électronique étant conservées en mémoire sur ledit dispositif électronique (315) et/ou sur un système serveur de réseau (120).

7. Le procédé selon la revendication 5 ou 6, dans lequel ledit identifiant est un code lisible optiquement tel qu'un code QR, ledit code lisible optiquement étant conservé en mémoire sur un système serveur de réseau (120) et ayant été fourni à partir de ce point audit dispositif électronique (315).

8. Le procédé selon l'une quelconque des revendications 5 à 7, comprenant :
- la vérification que ledit état dudit dispositif électronique (315) a été déterminé,
- en réponse à ladite vérification montrant que ledit état dudit dispositif électronique (315) a été déterminé, l'effacement dudit dispositif électronique (315), et
- après ledit effacement, la conservation en mémoire dudit identifiant et/ou desdites informations dudit état dudit dispositif électronique sur ledit dispositif électronique (315).

9. Le procédé selon l'une quelconque des revendications 1 à 8, dans lequel lesdits au moins deux capteurs (322, 324) proviennent d'un groupe se composant d'un accéléromètre, d'un gyroscope, d'un capteur de champ magnétique, d'un capteur de lumière ambiante, d'un capteur de proximité, d'un capteur capacitif et d'un appareil de prise de vues, et l'élément en entrée provient d'un groupe se composant d'un écran tactile, d'un clavier, d'un microphone, d'un appareil de prise de vues, d'un dispositif d'entrée haptique et d'un élément de communication.

10. Le procédé selon l'une quelconque des revendications 1 à 9, dans lequel la première entrée est une image d'un code QR.

11. Un dispositif électronique (110) comprenant au moins un processeur (140), une mémoire (142) comprenant du code de programme informatique (146), la mémoire et le code de programme informatique étant configurés de façon à, avec le au moins un processeur, amener le dispositif électronique à exécuter le procédé selon l'une quelconque des revendications 1 à 10.

12. Un système comprenant un dispositif électronique (110), au moins un processeur (180), une mémoire (182) comprenant du code de programme informatique (184), la mémoire et le code de programme informatique étant configurés de façon à, avec le au moins un processeur, amener le système à exécuter le procédé selon l'une quelconque des revendications 1 à 10.

13. Un produit de programme informatique incorporé sur un support lisible par ordinateur non transitoire, comprenant du code de programme informatique configuré de façon à, lorsqu'il est exécuté sur au moins un processeur, amener un dispositif ou un système à exécuter le procédé selon l'une quelconque des revendications 1 à 10.
